# EUROPEAN PATENT APPLICATION

(11) **EP 2 600 479 A1**
(43) Date of publication of application: **05.06.2013**
(21) Application number: 11191710.0
(22) Date of filing: 02.12.2011
(51) Int. Cl.: H02J 3/38

(54) **Controlling an electrical grid with islanded operation**

(71) Applicant: ABB Research Ltd., 8050 Zürich (CH)
(72) Inventor: Ishchenko, Dmitry, Cary, NC 27513 (US); Mohagheghi, Salman, Denver, CO 80230 (US); Oudalov, Alexandre, 5442 Fislisbach (CH); Stoupis, James, Durham, NC 27703 (US)
(74) Representative: ABB Patent Attorneys

(57) **Abstract**

An electrical grid 10 is connected to a plurality of loads 24a, 24b and to at least two electrical energy sources 14, 22a, 22b and is divided into segments 20a, 20b by switches 18a, 18b. When controlling the electrical grid 10 a load power and an supply power for each segment 20a, 20b is determined, an island 28a, 28b of the electrical grid 10 comprising at least one segment 20a, 20b, wherein an load power and an supply power is approximately balanced in the island 28a, 28b is determined and switches 18a, 18b isolating the island 28a, 28b from the remaining electrical grid 10 are opened.

## Description

### FIELD OF THE INVENTION

The invention relates to the field of electrical power networks. In particular, the invention relates to a method, a computer program, a computer-readable medium and a controller for controlling an electrical grid.

### BACKGROUND OF THE INVENTION

Usually an electrical power distribution grid comprises a plurality of loads connected in a radial, star-shaped, or otherwise meshed manner to a transformer that in turn is part of a large scale power transmission system which comprises a number of large power plants for generating electrical energy.

However, with the growing use of renewable energy resources, more and more distributed energy resources (or distributed energy source) like wind parks, photo voltaic panels, small hydro electric generators, and bio-fuel combined heat and power have been interconnected with such conventional electrical power distribution grids. In this context, problems may arise when a part of the electrical grid is unintentionally disconnected from the rest of the system. For example, in the case of a fault the respective line is disconnected from its main power supply. An isolated island may form, in which one or more distributed energy sources are interconnected with loads in an uncontrolled manner.

The existing interconnection standards for distributed energy sources, such as IEEE 1547, do not provide a clearly defined methodology for creating controlled islands. Unintentional islanding is strictly prohibited with the interconnection standard and intentional (i.e. controlled) islanding of distributed energy sources with distributed generation, however, is permitted but not fully addressed. Current utility practice is to disconnect a distributed energy source from the electrical power distribution grid to prevent island formation, which may potentially lead to significant reduction of power supply reliability as the level of penetration of distributed energy sources in the overall system further increases.

### DESCRIPTION OF THE INVENTION

The object of the invention is to provide a controlled islanded operation of an electrical power grid with distributed energy sources.

This object is achieved by the subject-matter of the independent claims. Further exemplary embodiments are evident from the dependent claims and the following description.

An aspect of the invention relates to a method of controlling an electrical grid.

According to an embodiment of the invention, the electrical grid is connected to a plurality of loads and electrical energy sources. For example, the electrical grid is a power distribution feeder connected to a power supply network such as a medium voltage or a transmission / sub-transmission network as a main electrical energy source, as well as to a plurality of distributed energy sources, each of which may provide a fluctuating amount of electrical power. The electrical grid is topologically divided into segments by means of neighboring switching devices such as load switches, circuit breakers and/or reclosers.

According to an embodiment of the invention, the method comprises the steps of: determining a load power and an supply power for each segment of the electrical grid; determining an island of the electrical grid comprising at least one segment, wherein an load power and an supply power at least approximately balance each other in the island; and opening switches isolating the island from the remaining electrical grid (i.e. remaining part of the electrical grid).

For example, the distribution feeder as electrical grid may be divided into segments interconnected and/or separated by switches and/or reclosers. Each segment may comprise at least one load and for each segment a load power and a supply power may be determined. There from boundaries of feeder islands (which may include multiple segments) with at least approximately balanced load power and supply power may be determined. The switches at the determined island boundaries may be opened to form isolated islands.

Further aspects of the invention relate to a computer program, which, when executed by an processor, is adapted to carry out the steps of the method as described in the above and in the following, to a computer-readable medium on which such a computer program is stored and to a controller for an electrical substation, which is adapted for executing the method as described in the above and in the following.

It has to be understood that features of the method as described in the above and in the following may be features of the computer program and the controller as described in the above and in the following.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig.1 schematically shows three basic islanding scenarios for an electrical grid according to an embodiment of the invention.
Fig. 2 schematically shows an islanding scenario for an electrical grid according to an embodiment of the invention.
Fig. 3 schematically shows a further islanding scenario for an electrical grid according to an embodiment of the invention.
Fig. 4 schematically shows a further islanding scenario for an electrical grid according to an embodiment of the invention.
Fig. 5 schematically shows a system comprising a controller for an electrical grid according to an embodiment of the invention.
Fig. 6 shows a flow diagram for a method of controlling an electrical grid according to an embodiment of the invention.
Fig. 7 shows a graph for dividing an electrical grid into segments according to an embodiment of the invention.

In principle, identical parts are provided with the same reference symbols in the figures.

### DETAILED DESCRIPTION OF EXEMPLARY EMBODIMENTS

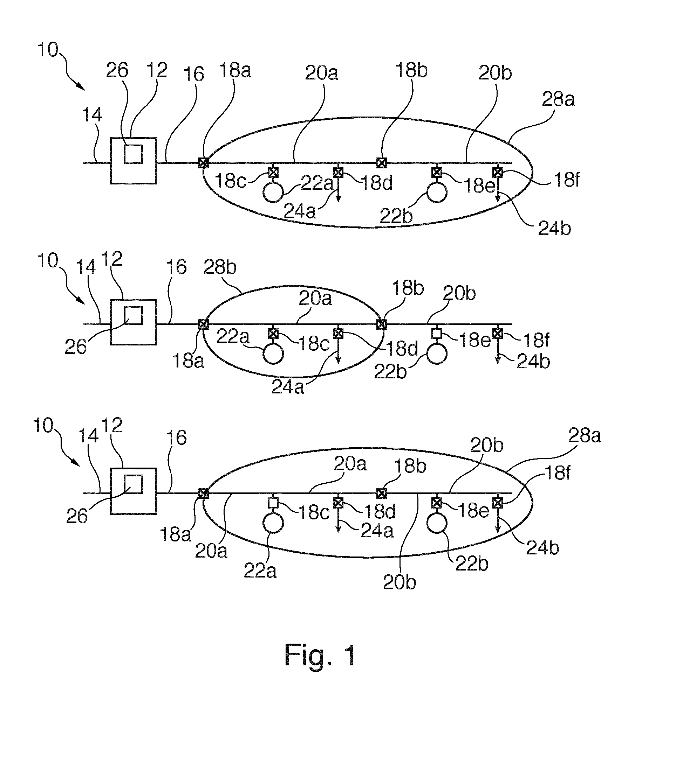

Fig.1 schematically shows three basic islanding scenarios for an electrical grid 10. The electrical grid 10 comprises a substation 12 connected to a power supply network 14 and a distribution feeder 16. The distribution feeder 16 is divided by switching devices (e.g. circuit breakers, reclosers, or load switches) 18a, 18b into segments 20a, 20b. A first distributed energy source 22a and a first load 24a are connected to the first segment 20a over a switch 18c, 18d. A second distributed energy source 22b and a second load 24b are connected to the second segment 20b over a switch 18e, 18f.

According to an embodiment of the invention, the electrical grid 10 is connected to a plurality of loads 24a, 24b and to at least two electrical energy sources 14, 22a, 22b.

According to an embodiment of the invention, the electrical grid 10 is divided into segments 20a, 20b by switches 18a, 18b.

According to an embodiment of the invention, the electrical grid 10 comprises a power distribution feeder 16.

According to an embodiment of the invention, an electrical energy source is a medium voltage grid 14 supplying the power distribution feeder 16.

According to an embodiment of the invention, further electrical energy sources are distributed energy resources 24a, 24b connected to the power distribution feeder 16.

In the first scenario all switches 18a to 18f are closed, which is indicated by crossed squares. The substation controller 26 continuously surveys the distribution feeder 16 and the connected components 22a, 22b, 24a, 24b. When the distribution feeder 16 has to be isolated from the network 14, the substation controller 26 determines possible island, which may be isolated. For example, in the first scenario, the substation controller determines that the load power of the loads 24a, 24b and the supply power of the distributed energy sources 22a, 22b is approximately balanced. In this case, the substation controller 26 commands the switch 18a to open and an balanced isolated island 28a is isolated from the electrical grid 16. The island 28a comprises the segments 20a, 20b.

According to an embodiment of the invention, the controller 26 is adapted for executing the method for controlling an electrical grid 10 as described in the above and in the following.

According to an embodiment of the invention, the method comprises the step of determining a load power and an supply power for each segment 20a, 20b.

According to an embodiment of the invention, the method comprises the step of determining an island 28a of the electrical grid 10 comprising at least one segment 20a, 20b, wherein an load power and an supply power is approximately balanced in the island (28a, 28b

Approximately balanced load and supply power may mean that the load power and the supply power differ less than 5 %, for example 1 % and/or that the distributed energy sources 22a, 22b generate as much power that the loads 24a, 24 may be supplied without a voltage drop in the island of less than 5 %, for example 1 %.

According to an embodiment of the invention, the method comprises the step of opening switches 18a, 18b isolating the island 20a, 20b from the remaining electrical grid 10.

In the second scenario in Fig. 1 below the first scenario, the distributed energy source 24b is off and the switch 18e is open. When the distribution feeder 16 has to be isolated from the network 14, the substation controller 26 determines possible island. In the second scenario, the supply power of the distributed energy source 24a only suffices for supplying one of the loads 24a, 24b. The controller 26 commands the switches 18a, 18b to open and an isolated balanced island 28b is formed. The island 28b comprises only the segment 20a and the load 24b is isolated from the rest of the system.

In the third scenario in Fig. 1 below the second scenario, the distributed energy source 24a is off and the switch 18e is open. The supply power of the distributed energy source 24b only suffices for supplying one of the loads 24a, 24b. The controller 26 commands the switches 18a to open and an isolated island 28a is formed. For balancing the island 28a, the controller 26 commands the switch 18f to open for shedding the load 24b.

In particular, when the remaining supply power (the power generation of the distributed energy sources connected to the island) is not capable to supply all loads connected to the island, a fast load disconnection (i.e. load shedding) may be done at the same instant with the island formation, i.e. the opening o the switches to form the island.

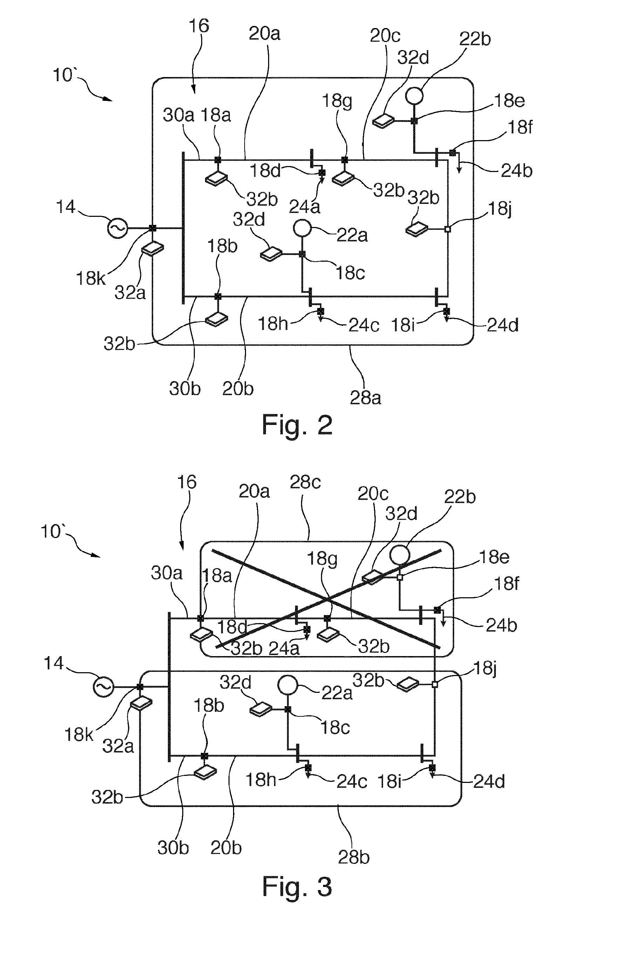

Fig. 2 schematically shows an islanding scenario for a further electrical grid 10'. The electrical grid 10' comprises a star shaped distribution feeder 16 which comprises power lines 30a, 30b that are connected via a switch 18k (a point of common coupling) to a medium voltage utility grid 14.

The islanding area of the electrical grid 10' comprises at least two distributed energy sources 22a, 22b and four lumped loads 24a, 24b, 24c, 24d. For example, the distributed energy source 22a may be a synchronous generator and the distributed energy source 22b may be a wind turbine.

The electrical grid 10' also comprises a number of current interrupting devices, such as line circuit breakers 18a, 18b, distributed energy source circuit breakers 18c, 18e, a midline recloser 18g, load switches 18d, 18f, 18h, 18i and a tie switch 18j which is normally open.

Each of the switches18a to 18k comprises an IED (integrated electronic device) or controller 32 which may communicate with the substation controller 26. With the states (opened or closed) of the switches, connectivity information of the electrical grid 10' may be determined by the substation controller 26.

Furthermore, the distributed energy sources 22a, 22b and the loads 24a to 24d may communicate their power generation (supply power) or power consumption (load power) the substation controller 26. The potential islanding situations are determined and the islanding decisions are made by the substation controller 26 with the connectivity information of the local area distribution system 10' available via the communications interfaces of the IEDs 32, the loads and the distributed energy sources.

With the switches 18k, 18a, 18b, 18g, 18j, the electrical grid 10' may be divided into segments 20a, 20b, 20c. A (line) segment may be defined as a portion of the electrical grid 10' between the two adjacent line circuit breakers or reclosers. It should be noted that in an actual system there may be multiple distributed energy sources as well as multiple distributed loads connected to each segment 20a, 20b, 20c. It should also be noted that a segment 20a may not be connected to a distributed energy source. But there may be at least one load per segment.

In the electrical grid 10' an island 28a may be formed by opening either one of the substation circuit breaker 18k, other feeder circuit breakers 18a, 18b, reclosers 18g, 18j, or several of them simultaneously. If the total amount of supply power in the island 28a is less than the total load in the same island 28a, a specific amount of load power may need to be promptly disconnected, which is referred to as load shedding.

Depending on the connectivity of the distributed energy sources, their supply power and the load power, multiple islanding scenarios are possible.

In the scenario of Fig. 1 all switches despite 18j are closed. If load power and supply power within the complete electrical grid 10' are balanced, i.e. the sum of the load power of the loads 24a, 24b, 24c, 24c is (approximately) the sum of the supply power (the power generation) of the distributed energy sources 22a, 22b, the substation circuit breaker 18k is opened to form a stable island 28a.

Fig. 3 schematically shows a second islanding scenario for the electrical grid 10'. The distributed energy source 22b on the upper feeder line 30a is offline. In this case, the remaining distributed energy source 22a will only be able to supply a limited load 24c and 24d on the lower feeder 30b. A smaller island 28b is formed by opening both the substation circuit breaker 18k and the circuit breaker 18a. The loads 24a, 24b will be disconnected from power supply.

In this case, the controller 25 has calculated the overall power of the island 28a (see Fig. 2), the island 28b and the island 28c and has come to the decision, that only the island 28b is balanced.

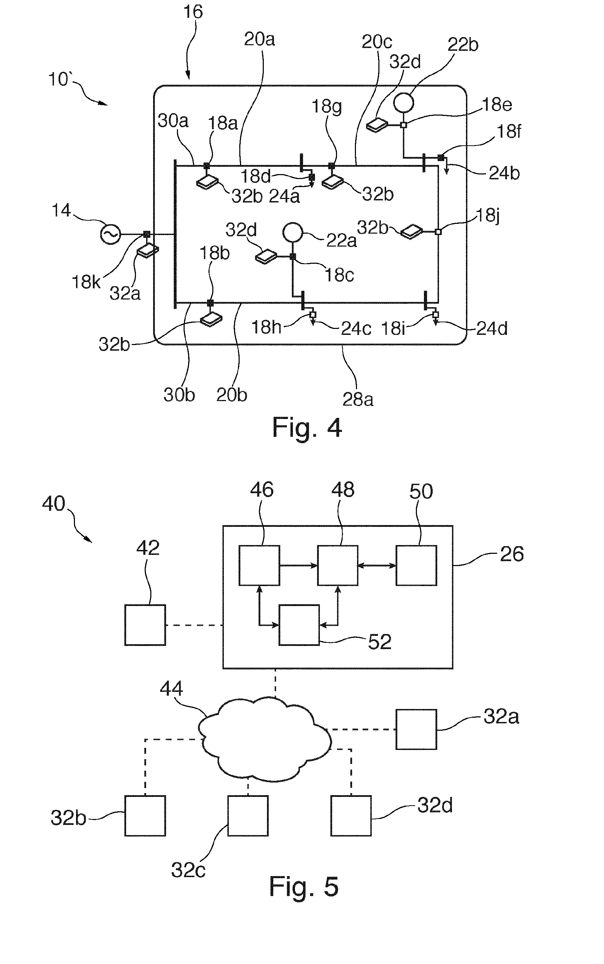

Fig. 4 schematically shows a further islanding scenario for an electrical grid 10'. The distributed energy source 22b connected to the upper feeder line 30a is offline and the loads 24c, 24d on the lower feeder line 30b are disconnected. In this case, the substation circuit breaker 18k is opened so that the loads 24a, 24b on the upper feeder line 30a can be supplied by the distributed energy source 22a connected to the lower feeder line 30b.

Fig. 5 schematically shows a system 40 and a communication model 40 comprising a controller 26 for an electrical grid 10, 10'. The controller 26 is connected to a distribution SCADA 42, over which an operator may send commands to the controller 26.

The controller 26 is connected to a communication system/network 44 (comprising WAN, LAN VPN) to communicate with further remoter controllers 32a, 32b, 32c, 32d of the electrical grid 10, 10'. These controllers comprise the IED 32a of the substation breaker 18k, the IEDs 32b of the circuit breakers and reclosers 18a, 18b, 18g, 18j, the IEDs 32c of the load switches 18d, 18f, 18h, 18i and the IEDs 32d of the distributed energy sources 22a, 22b. Over the communication network 44, the substation controller 26 and the IEDs 32a to 32d may exchange settings, status data, control commands, measurement values and general data, for example of the distributed energy sources.

The centralized automated communication system 44 installed at the substation level may be used to control and supervise the formation of a planned island in an electrical power distribution grid 10, 10' with distributed energy sources 22a, 22b.

The connectivity of loads 24a to 24d and distributed energy sources 22a, 22b is continuously monitored over the communication network 44. The control decisions are made by the controller 26 to create an island of the pre-determined structure based either on certain conditions within the electrical grid 10, 10' or an manual command from the operator.

When in islanding mode, protection settings of the IEDs 32a to 32d within the island and a control system mode of distributed energy sources 22a, 22b may automatically be adjusted via the communication network 44.

The control method may be executed by the substation controller 26 by using fast messaging within Virtual LANs created according to the general principles of IEC 61850-90-1. The communications infrastructure 44 may integrate LAN and low latency wireless WAN.

The substation controller 26 comprises a network connectivity model 46, an island formation engine/module 48 and an (external) load shedding engine/module 50 that may be accessed by the general control functionality 52. The functional modules 46, 48, 50, 52 may be implemented as programmed software modules or procedures, respectively; however, one skilled in the art will understand that the functional modules may be implemented fully or partially in hardware.

The substation controller 26 may comprise a computer with an processor on which a computer program, is running which is adapted for controlling the electrical grid 10, 10' as described in the above and in the following. The controller 26 may comprise a computer-readable medium on which the computer program is stored. It has to be noted that a computer-readable medium may be a floppy disk, a hard disk, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.

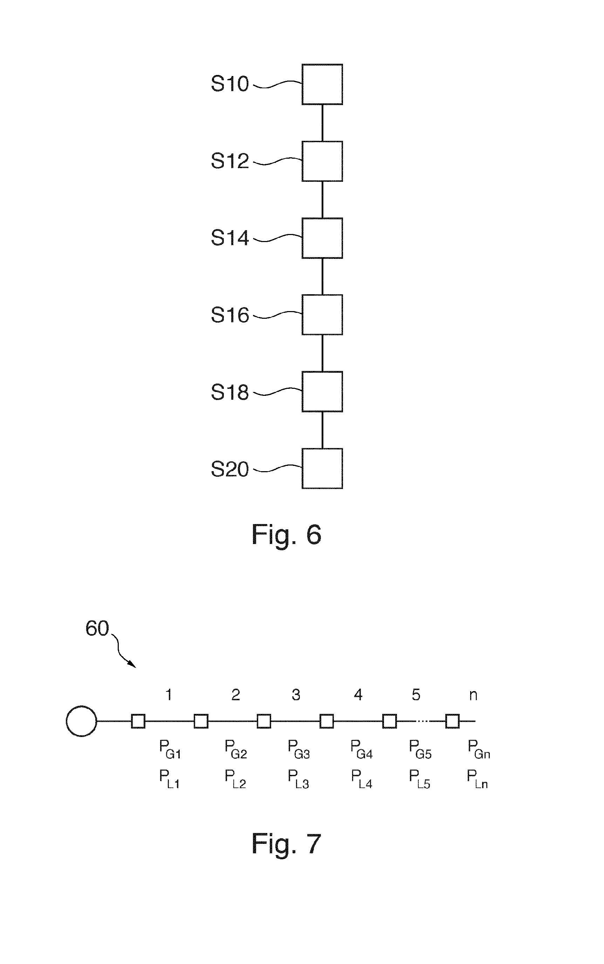

Fig. 6 shows a flow diagram for a method of controlling an electrical grid according to an embodiment of the invention.

During normal operating conditions (normal operation mode), the electrical grid 10, 10' may operate according to IEEE Std. 1547. Then during an unscheduled event, for instance loss of a utility line, instead of using the Direct Transfer Trip to promptly disconnect the distributed energy source 22a, 22b before reclosing the substation breaker 18k, an transition to island mode may occur as described in the above and in the following.

A method for creating an controlled island 28a, 28b is described in the following.

In step S10, the network connectivity model 46 is created in the substation controller 46 and fed into the island formation engine 48. The model 46 may represent the graph of the electrical grid 10, 10' and may indicate which distributed energy source 22a, 22b units are connected to the electrical grid 10, 10', and also which switches 18a to 18k are open/closed. The model 46 is created based on information received from the field IEDs 32a to 32d.

According to an embodiment of the invention, the method comprises the step of creating a connectivity model of the electrical grid 10, 10', the connectivity model comprising at least one of a topology of the electrical grid 10, opening states of switches 18a to 18k interconnecting the segments 20a, 20b, 20c, connection states of loads 24a to 24d and connection states of electrical energy sources 22a, 22b.

In step S12, the island formation engine 48 continuously analyzes the connectivity information and decides on the possible island 28a, 28b, 28c configurations based on the most recent connectivity of the distributed energy sources 22a, 22b and the electrical grid 10, 10', and the load profile. The islanding goal may be to maximize the reliability of power supply by preventing most of the loads 24a to 24d in the electrical grid 10, 10' from being interrupted in supply.

In an offline scheme for island formation, the electrical grid 10, 10' may be split into smaller islands 28a, 28b, 28c pre-determined at the design stage considering factors such as sync check capability of the line segment circuit breakers 18a, 18b, 18g, 18j, 18k, communications, remote control capabilities of load switches 18d, 18f, 18h, 18i, and connectivity of the distributed energy sources 22a, 22b.

The load power data and load generation/supply data for each segment 20a, 20b, 20c of the electrical grid 10, 10' may also have to be taken into account. This may be done by referring to the historical data on the load flow of the electrical grid 10, 10'. This may be to ensure that the proposed islanding solution not only is valid for the present time, but also considers the forecast of the load power and supply power for each island 28a, 28b, 28c and may ensure that the load-generation balance is not violated during the short term forecast period.

According to an embodiment of the invention, the load power and/or the supply power for each segment 20a, 20b, 20c are determined based on stored historical data or assumptions).

According to an embodiment of the invention, the load power and/or the supply power for each segment 20a, 20b, 20c are determined based on forecast data.

A list of possible islands 28a, 28b, 28c depending on the above mentioned factors may be created offline and may be stored in the substation controller 26 in the form of a database or a lookup table.

According to an embodiment of the invention, the segments 20a, 20b, 20c of the island 28a, 82b, 82c are predefined. For example, the corresponding determined island boundaries may be stored in the controller 26 for later retrieval.

In an online scheme for island formation, graph theory may be applied to automatically (and sporadically upon detecting a change in the system operating conditions or topology) possible islands 28a, 28b, 28c of the electrical grid 10, 10'. This will be described in more detail with respect to Fig. 7.

At the end of step S12, the controller 26 has decided to form one or more islands 28a, 28b, 28c.

In step S14, the controller 26 commands the respective switches, for example one or more from 18k, 18a, 18b to open to divide the electrical grid into the identified islands 28a, 28b, 28c and isolated islands are formed.

Furthermore, optionally, the real and reactive power output of the distributed energy source 22a, 22b in an island 22b may be adjusted to match the load in the isolated island. This may achieved by using one of the following strategies:
● Decentralized approach where all capable distributed generators are switched from constant active and reactive power (PQ) to constant voltage and speed (Vf) control mode.
● Centralized control by Micro-Grid Central Controller (MGCC) when in the stable isolated island a secondary/optimal control of capable distributed energy sources 22a, 22b may be performed such that the capable distributed energy sources 22a, 22b may still run in the PQ mode where the MGCC will supply the appropriate P and Q settings.
● Single master mode in case more than one distributed energy source 22a, 22b is located in an island 28a, 28b, 28c, wherein the largest capable distributed energy source 22a, 22b switches its mode from PQ-control to Vf-control while the rest of the distributed energy sources (slaves) 22a, 22b remain in the PQ mode and follow the voltage frequency dictated by the first distributed energy source 22a, 22b.

According to an embodiment of the invention, the method comprises the step of adjusting a power output and/or a power generation behaviour of an electrical energy source 22a, 22b connected to the island 28a, 28b, 28c after the isolation the island.

In step S16, optionally, protection settings for IEDs 32a to 32d within the isolated island 28a, 28b, 28c may be modified, since the short circuit currents within the isolated island 28a, 28b, 28c may typically be less than during normal operation mode. Also, the pickups of voltage and frequency elements may be adjusted to prevent tripping. This may accomplished by switching to pre-determined Alternate Protection Profile(s).

According to an embodiment of the invention, the method comprises the step of adjusting protection settings of a controller 32a to 32d for an electrical device connected to the island 28a, 28b, 28c after the isolation the island.

In step S18, if after forming isolated islands 28a, 28b, 28c, the balance between the load power and supply power in one or more islands 28a, 28b, 28c gets violated (for instance load power increases or supply power decreases) and there is not enough storage to compensate for the mismatch, then a load shedding may be executed in the respective isolated island 28a, 28b, 28c. Load shedding may be performed by the load shedding engine 50. The amount and the location of the load to be shed may be determined by the substation controller 26.

It may be also possible that the low voltage circuit breakers 18d, 18f, 18h, 18i may be equipped with under-frequency relays that upon detecting an imbalance in the frequency (outside the accepted bounds defined in the standard) trip the respective connected load. This may be a decentralized load shedding scheme.

According to an embodiment of the invention, the method comprises the step of continuously determining a load power and an supply power for the island 28a, 28b, 28c after the isolation of the island.

According to an embodiment of the invention, the method comprises the step of shedding a load 24a to 24d connected to the island 28a, 28b, 28c, when the load power exceeds the supply power for a predefined value.

In step S20, a reconnection of the isolated islands 28a, 28b, 28c to the medium voltage grid 14 is done manually or automatically by the controller 26, for example with sync check supervision.

According to an embodiment of the invention, the method comprises the step of automatically reconnecting the island 28a, 28b, 28c with the remaining electrical grid 10.

Fig. 7 shows a graph 60 for dividing an electrical grid 10 into segments 20a, 20b. The following example is described with respect to an electrical grid 10 comprising one distribution feeder 16. The distribution feeder 16 may comprise line segments (edges), and the nodes (vertices, the switches which separate the power line in segments) are numbered from 1 to n starting from the substation bus.

P_{Gi} is the total amount of generation and available storage in the i-th feeder segment, i.e. the supply power. P_{Li} s the load in the i-th feeder segment, i.e. the load power.

An electrical storage may be represented as an power source, since in the islanding mode, electrical storage may be commanded to discharge and then supplies power like an additional "normal" power source. So even if at some point in time storage is charging, i.e. is a load, when connected to the electrical grid 10, it may be anticipated that it will turn to a power source as soon as an island 28a, 28b, 28c is formed.

It should be noted that the load power and supply power usually are time-dependent and may change based on the time of the day. Specifically, if the distributed energy sources 22a, 22b are based on renewable energy (wind, solar), then their output is normally based on Maximum Power Point Tracking (MPPT), and hence, varies based on the availability of the energy resource (wind, solar)

The topology of the electrical grid 10 may be represented by a graph G(V,E) 60, where *V* = {*v*₁, *v*₂, ..., *vₙ*} is a set of vertices (nodes) and *E* = {*e*₁, *e*₂, ..., *eₙ*} is a set of edges (line segments). The topology graph 60 may include weights, associated with each line segment W(e), *e* ∈ *E*. The weights (power export or import at each segment) may be defined as *W*(*eᵢ*(*t*)) = *P_{Li}*(*t*) - *P_{Gi}*(*t*), *i* = 1,...,*n*

In general, the method may only use the above weights to solve for the islanding formation. This data may be readily achieved from the measurements available from the circuit breakers and reclosers (i.e., difference between the measurements from the switches at the extremes of the feeder segment).

If more granularity is needed, it is also possible to access the measurements from the IEDs 32a of the distributed energy sources 22a, 22b. Together with the measurements from the downstream/upstream switches, an estimate of the overall load on each feeder section may be made. However, it may also be assumed that in some cases, loads 24a to 24d may be equipped with intelligent switches 18d, 18f, 18h, 18i with measurement devices and communication means to the substation, which provides an even higher granularity level.

It should be noted that a breakdown of weights to generation and load in each segment 20a, 20b, 20c may be necessary to provide an estimate of the load-generation balance of that segment based on the individual load forecast and generation forecast.

The weighted graph G(V,E) 60 may be automatically divided into partitions (forthcoming islands) so that the sum of the weights in each partition (i.e. the sum of load powers and supply powers of the segments) is minimized using for instance Kernigan-Lin or k-way multilevel partitioning algorithms.

The partitioning may be performed based on the current values of load power and supply power on each segment 20a, 20b, 20c. Once the islands 28a, 28b, 28c are formed, the controller 26 may monitor the balance between the load power and the supply power to ensure that it is maintained at all times, and may take remedial action if necessary.

According to an embodiment of the invention, an island 28a, 28b, 28c is determined from a graph 60 of the electrical grid 10 by dividing the graph 60 into subgraphs.

According to an embodiment of the invention, the graph 60 is based on the connectivity model of the electrical grid 10.

If the communication between one or more distributed energy sources 22a, 22b and the substation controller 26, or one or more switches 18a to 18k and the substation controller 26 fails, it may be possible to use the generation forecast and the load forecast (available at the substation controller 26) in the method in order to derive an approximate solution for the islanding.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference numeral in the claims should not be construed as limiting the scope.

## Claims

1. A method of controlling an electrical grid (10) connected to a power supply network (14), a plurality of loads (24a, 24b), and a plurality of distributed energy sources (22a, 22b), wherein the electrical grid (10) is divided into segments (20a, 20b) by switching devices (18a, 18b), the method comprising the steps of:
determining, for each segment (20a, 20b), from loads and distributed energy sources connected to the segment, a load power and a supply power;
determining an island (28a, 28b) of the electrical grid (10) comprising at least one segment (20a, 20b) such that load power and supply power are mutually balanced in the island (28a, 28b);
opening switching devices (18a, 18b) to isolate the island (28a, 28b) from the remaining electrical grid (10).

2. The method of claim 1, comprising
determining updated load power and/or supply power for each segment (20a, 20b, 20c) upon switching of a switching device of the electrical grid (10).

3. The method of claim 1, comprising
determining the load power and/or the supply power for each segment (20a, 20b, 20c) from stored historical data or from forecast data.

4. The method of one of claims 1 to 3, further comprising the step:
creating a connectivity model of the electrical grid (10), the connectivity model comprising at least one of a topology of the electrical grid (10), opening states of switches (18a to 18k) interconnecting the segments (20a, 20b, 20c), connection states of loads (24a to 24d) and connection states of electrical energy sources (22a, 22b).

5. The method of one of claims 1 to 3,
wherein the segments (20a, 20b, 20c) of the island (28a) are predefined.

6. The method of one of claims 1 to 3,
wherein an island (28a, 28b, 28c) is determined from a graph (60) of the electrical grid (10) by dividing the graph (60) into sub-graphs.

7. The method of claim 6, wherein the graph (60) is based on a connectivity model of the electrical grid (10).

8. The method of one of claims 1 to 3, further comprising the step of:
automatically reconnecting the island (28a, 28b, 28c) with the remaining electrical grid (10).

9. The method of one of claims 1 to 3, further comprising the step of:
adjusting a power output and/or a power generation behavior of an electrical energy source (22a, 22b) connected to the island (28a, 28b, 28c) after isolation of the island.

10. The method of one of claims 1 to 3, further comprising the step of:
adjusting protection settings of a controller (32a to 32d) for an electrical device connected to the island (28a, 28b, 28c) after isolation of the island.

11. The method of one of the preceding claims, further comprising the step of:
continuously determining a load power and an supply power for the island (28a, 28b, 28c) after the isolation of the island;
shedding a load (24a to 24d) connected to the island (28a, 28b, 28c), when the load power exceeds the supply power for a predefined value.

12. The method of one of the preceding claims,
wherein the electrical grid (10) comprises a power distribution feeder (16),
wherein the power supply network is a medium voltage grid (14) supplying the power distribution feeder (16),
wherein the distributed energy sources comprise intermittent renewable distributed energy resources (24a, 24b) connected to the power distribution feeder (16).

13. A computer program, which, when executed by a processor, is adapted to carry out the steps of the method of one of claims 1 to 12.

14. A computer-readable medium on which a computer program according to claim 13 is stored.

15. A controller (26) for an electrical substation (12), the controller adapted for executing the method of one of claims 1 to 12.
